# EUROPÄISCHE PATENTSCHRIFT

(11) **EP 2 650 091 B1**
(45) Veröffentlichungstag und Bekanntmachung des Hinweises auf die Patenterteilung: **04.01.2017**
(21) Anmeldenummer: 13161064.4
(22) Anmeldetag: 26.03.2013
(51) Int. Cl.: B26D 1/03, B26D 1/08, B26D 1/09, B26D 7/26, B26D 1/00, B29D 30/46

(54) **Schneidenmesser**
Cutting knife
Lame de coupe

(30) Priorität: 12.04.2012 DE 102012007193
(43) Veröffentlichungstag der Anmeldung: 16.10.2013
(73) Patentinhaber: Karl Eugen Fischer GmbH, 96224 Burgkunstadt (DE)
(72) Erfinder: Hoffmann, Bernd, 96224 Burgkunstadt (DE); Zeis, Andreas, 96260 Weismain (DE)
(74) Vertreter: Blaumeier, Jörg

(56) Entgegenhaltungen:
- DE-A1- 3 108 954
- DE-A1-102009 059 940
- DE-B3-102005 007 676
- DE-C1- 10 203 447
- JP-U- S57 108 827

## Beschreibung

Die Erfindung betrifft ein Schneidenmesser, insbesondere für eine Stahlcordbandschere, umfassend einen balkenförmigen Träger, an dem mehrere jeweils wenigstens einen Schneideinsatz aufweisende Messerhalter lösbar befestigt sind, wobei sich die Schneideinsätze zu einer durchgehenden Schneide ergänzen.

Schneidmesser der in Rede stehenden Art kommen überall dort zum Einsatz, wo bandförmige Materialien zu schneiden sind. Sie sind entweder feststehend oder beweglich und wirken mit einem anderen Schneidmesser zusammen, um das dazwischen befindliche Bandmaterial zu schneiden. Ein wesentliches Einsatzgebiet ist das Schneiden von Stahl- oder Textilcordbändern, die im Rahmen der Reifenherstellung verwendet werden und von einem Rollmaterial über eine entsprechende Stahl- oder Textilcordbandschere in einzelne handliche und weiter zu verarbeitende Bandabschnitte zu schneiden sind. Hierzu weist ein bekanntes Schneidmesser einen balkenförmigen Träger auf, an dem ein sich über die gesamte Trägerlänge erstreckender Schneideinsatz aus Hartmetall angeordnet ist. Üblicherweise ist dieser Schneideinsatz verlötet, mithin also unlösbar mit dem Träger verbunden. Das Messer weist üblicherweise eine Länge von mehr als einem Meter auf, üblich sind Längen von 1,5 Metern oder mehr, je nach Größe der Schere.

Der Schneideinsatz ist, insbesondere beim Schneiden von Stahlcordband, das aus einem elastischen Material, üblicherweise Gummi besteht, in das eine Vielzahl längslaufender, parallel zueinander liegender Stahlfäden eingebracht ist, dauerhaft Belastungen ausgesetzt, nachdem die Stahlfäden eine beachtliche Härte aufweisen, und nachdem üblicherweise mit beachtlich hoher Frequenz geschnitten wird. Dies kann dazu führen, dass der Schneideinsatz beschädigt wird, es kann zu Materialausbrüchen oder Rissen kommen, die einen weiteren Einsatz ausschließen. Insbesondere bei stärkeren Beschädigungen, die nicht mehr durch ein Nachschleifen des Schneideinsatzes behoben werden können, kann das Schneidmesser insgesamt nicht mehr verwendet werden, da der Schneideinsatz wie ausgeführt in der Regel unlösbar mit dem Träger verbunden ist.

DE 10 2005 007 676 B3 zeigt ein Schneidmesser der eingangs genannten Art. Es zeichnet sich dadurch aus, dass die Werkzeugschneiden von den Schneiden mehrerer Schneidplatten gebildet werden.

DE 31 08 954 A1 beschreibt ein Messer mit einer Schneide aus polykristallinem Diemantmaterial, das auf einer Hartmetallaufnahme befestigt ist. Die Schneide besteht hierbei aus einer Vielzahl von Diamantsegmenten, die auf gleich geformten Trägern befestigt sind. Diese Träger sind an einem gemeinsamen Messerhalter angeordnet.

DE 102 03 447 C1 zeigt eine Schere zum Abtrennen von Abschnitten von einem mittels einer Greifervorrichtung durchzogenen Materialband, und zum Ablegen der Abschnitte auf einem unterhalb der Materialbandebene angeordeten Abtransportband, wobei unter einem Obermesser ein das darüberliegende Teilband des Abtransportbandes seitlich umgreifender Gegenhalter angeordnet ist, der das Materialband mit dem Obermesser verklemmt.

Aus DE 10 2009 059 940 A1 ist ein Schermesser für Schneidgeräte bekannt, welches sich dadurch auszeichnet, dass die Schermesser mit austauschbaren Schneideinsätzen ausgestattet sind. Hierbei können die Schneideinsätze an einem Scherenschenkel des Schermessers durch an einer Aufnahmetasche angeordnete Keilflächen gehalten sein.

Der Erfindung liegt damit das Problem zugrunde, ein demgegenüber verbessertes Schneidmesser anzugeben.
Zur Lösung dieses Problems ist bei einem Schneidmesser der eingangs genannten Art vorgesehen" dass am Träger an jeder Seite wenigstens eine in der Montagestellung die Messerhalter gegeneinander verspannende Spannplatte lösbar befestigt ist.

Das erfindungsgemäße Schneidmesser ist mit besonderem Vorteil modular aufgebaut. Es besteht aus dem zentralen balkenförmigen Träger, über den das Schneidmesser insgesamt scherenseitig verbaut wird. An dem Träger sind erfindungsgemäß mehrere einzelne Messerhalter lösbar befestigbar. Jeder Messerhalter trägt wenigstens einen Schneideinsatz. In der Montagestellung, wenn also alle anzuordnenden Messerhalter am Träger montiert sind, liegen die Schneideinsätze nebeneinander und bilden eine durchgehende Schneide, die einen einheitlichen, homogenen Schnitt ermöglicht, gleichwohl aber modular aufgebaut ist.

Wird nun einer der Schneideinsätze im Betrieb beschädigt, so ist es ohne Weiteres möglich, lediglich den Messerhalter mit dem beschädigten Schneideinsatz zu demontieren und gegen einen Messerhalter mit einem neuen Schneideinsatz auszutauschen. Der Messerhalter respektive der neue Schneideinsatz fügt sich nahtlos in die Reihe der "alten" Schneideinsätze ein und bildet wiederum eine durchgehende Schneide, die gegebenenfalls nur nachzuschleifen ist, um die Planizität herzustellen. Das Schneidmesser als solches ist jedoch durch einfachen Austausch des Messerhalters mit Schneideinsatz wieder komplett funktionsfähig und kann weiter verwendet werden. D. h., dass das Schneidmesser auch bei starker Beschädigung eines Schneideinsatzes ohne Weiteres aufgearbeitet und erneut eingesetzt werden kann, anders als bei bisher bekannten Schneidmessern.

In Weiterbildung der Erfindung ist vorgesehen, dass die Länge eines Messerhalters der Länge des daran befestigten Schneideinsatzes entspricht. D. h., dass der Messehalter den Schneideinsatz selbst auf ganzer Länge trägt respektive abstützt. Alternativ ist es möglich, zwei oder mehr Schneideinsätze an einem Messerhalter anzuordnen, deren Gesamtlänge dann jedoch genau der Messerhalterlänge entspricht. Zur Integration respektive Befestigung des Schneideinsatzes am Messerhalter weist der Messerhalter in Weiterbildung der Erfindung eine Ausnehmung auf, in der der Schneideinsatz formschlüssig aufgenommen und in Lastrichtung gegengelagert ist. Ist beispielsweise eine querschnittlich gesehen eckige Ausnehmung vorgesehen, so weist der Schneideinsatz eine komplementäre Form, die sich formschlüssig einpassen lässt. Die Fixierung des Schneideinsatzes in der Ausnehmung erfolgt auch hier vorzugsweise durch Verlöten, d. h., dass der Schneideinsatz unlösbar am Messerhalter angeordnet ist.

Zur Befestigung der Messerhalter am Träger kann auch der Träger eine Ausnehmung aufweisen, in der die Messerhalter formschlüssig aufgenommen sind. Auch hier ist also eine Formkompatibilität zwischen dem Träger respektive seiner Ausnehmung und den Messerhaltern gegeben, die eine feste Anordnung der Messerhalter ermöglicht.

Dabei kann auch hier die Formkompatibilität derart sein, dass der Träger in Folge der formschlüssigen Aufnahme die Messerhalter zumindest in Lastrichtung gegenlagert. Eine zweckmäßige Weiterbildung sieht weiterhin vor, dass die Ausnehmung eine Längsnut aufweist, in die ein Längsvorsprung der jeweiligen Messerhalter formschlüssig eingreift. Durch diesen Eingriff des Vorsprungs in die Nut wird quasi ein Hintergriff realisiert, der es ermöglicht, die Messerhalter sowohl in als auch gegen die Lastrichtung gegenzulagern. Die ist insbesondere dann zweckmäßig, wenn die beiden im Schnitt zusammenwirkenden Messer nach dem Schnitt einander minimal überlappen respektive eine Bombierung gegeben ist und beim Zurückfahren die Messer einander kontaktieren.

Zur einfachen Befestigung der Messerhalter dienen zweckmäßigerweise Schrauben, die halterseitige Bohrungen durchgreifen und trägerseitig jeweils in eine Gewindebohrung eingeschraubt sind.

Nach einer besonders vorteilhaften Weiterbildung der Erfindung ist am Träger an jeder Seite wenigstens eine in der Montagestellung die Messerhalter gegeneinander verspannende Spannplatte befestigbar. Über diese beiden beidseits an den Stirnflächen des Trägers befestigbaren Spannplatten werden die Messerhalter gegeneinander verspannt, d. h., dass eine Spannkraft parallel zur Schneidebene erzeugt wird, die die Messerhalter und damit auch die Schneideinsätze fest gegeneinander presst. Hierdurch wird die Stabilität des modularen Aufbaus noch weiter verbessert.

Zur Befestigung der Spannplatten und zur Ermöglichung des Aufbringens der hohen Spannkraft ist am Träger seitlich jeweils eine Gewindebohrung vorgesehen, in die eine die jeweilige Spannplatte verspannende Schraube eingeschraubt ist. Die Spannplatten werden also nach Befestigung der Messerhalter angesetzt und mit den Schrauben befestigt. Mit dem festen Anziehen der Schrauben werden gleichzeitig die Spannplatten, die gegebenenfalls über an dem jeweils benachbarten Messerhalter unmittelbar anliegende, leicht erhabene Spannabschnitte verfügen, fest gegen die Messerhalter gepresst, die dadurch gegeneinander verspannt werden.

Neben dem Schneidenmesser selbst betrifft die Erfindung ferner eine Stahlcordschere, umfassend wenigstens ein Schneidmesser der beschriebenen Art.

In Weiterbildung der Erfindung kann die Stahlcordschere zwei Schneidmesser aufweisen, von denen das eine ein Obermesser und das andere ein Untermesser bildet. Zumindest eines der Messer ist über eine geeignete Mechanik in der Regel vertikal bewegbar und gegen das andere Messer verstellbar, sodass ein zwischen den Messern befindliches Bandmaterial geschnitten werden kann.

Weitere Vorteile, Merkmale und Einzelheiten der Erfindung ergeben sich aus dem im Folgenden beschriebenen Ausführungsbeispiels sowie anhand der Zeichnungen. Dabei zeigen:
- Fig. 1: eine Seitenansicht eines erfindungsgemäßen Schneidmessers,
- Fig. 2: eine Schnittansicht längs der Linie II - II in Fig. 1,
- Fig. 3: eine Schnittansicht längs der Linie III **-** III in Fig. 2, und
- Fig. 4: eine Stirnseitenansicht des Schneidmessers aus Fig. 1.

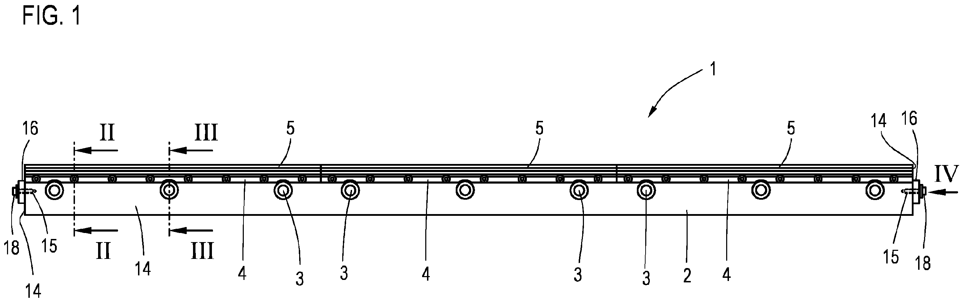

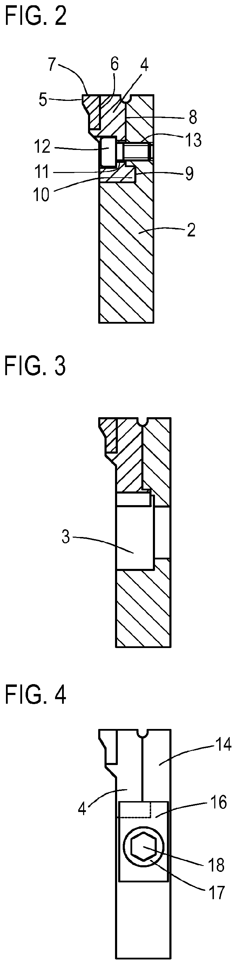

Fig. 1 zeigt ein erfindungsgemäßes Schneidmesser 1, umfassend einen balkenförmigen Träger 2, der in der Regel eine Länge größer 1 m aufweist, wobei Längen bis 6 m oder mehr möglich sind. Am Träger 2 sind, über seine Länge verteilt, eine Vielzahl einzelner Bohrungen 3 vorgesehen, die - siehe Fig. 3 - gestuft ausgeführt sind, und in die zur Befestigung des Schneidmessers 1 an einem dementsprechenden Abschnitt einer Schere, insbesondere einer Stahlcordbandschere, dienende Schrauben eingesetzt werden, die mit ihren Köpfen auf der jeweiligen Bohrungsstufe aufgelagert sind.

An dem Träger 2 sind im gezeigten Ausführungsbeispiel drei Messerhalter 4 lösbar befestigt, die jeweils einen Schneideinsatz 5 aufweisen, der aus einem Hartmetall besteht. Wie Fig. 1 zeigt, entspricht die Länge eines Schneideinsatzes 5 exakt der Länge eines Messerhalters 4, wobei die im gezeigten Beispiels vorgesehenen insgesamt drei Messerhalter 4 nebst ihren Schneideinsätzen 5 wiederum exakt der Länge des balkenförmigen Trägers 2 entsprechen. Sind an einem Messerhalter 4 mehrere Schneideinsätze 5 nebeneinander angeordnet, so entspricht deren Gesamtlänge genau der Länge des Messerhalters 4.

Wie Fig. 2 zu entnehmen ist, weist jeder Messerhalter 4 eine im gezeigten Beispiel rechtwinklige Ausnehmung 6 auf, in die der jeweilige Schneideinsatz 5 formschlüssig eingesetzt ist. Der Schneideinsatz 5 weist also eine ebenfalls eckige Form auf, die formschlüssig in die Ausnehmung 6 eingepasst werden kann. Der Schneideinsatz 5 wird in der Ausnehmung 6 vorzugsweise verlötet, mithin also unlösbar befestigt. An der freiliegenden Schneideinsatzseite befindet sich die eigentliche Schneide 7, wobei sich die Schneiden 7 sämtlicher dreier Schneideinsätze 5 zu einer durchgehenden Schneide ergänzen.

Wie Fig. 2 ferner zeigt, ist am Träger 2 eine weitere Ausnehmung 8 vorgesehen, die ebenfalls im Wesentlichen eckig ist, jedoch am Ausnehmungsgrund eine Längsnut 9 aufweist, die sich über die gesamte Trägerlänge erstreckt.

Ersichtlich ist auch jeder Messerhalter 4 formkompatibel ausgebildet, d. h., er entspricht in seiner rückseitigen Grundform exakt der Ausnehmungsform und weist einen Längsvorsprung 10 auf. Er kann, siehe Fig. 2, formschlüssig in die Ausnehmung 8 unter Eingriff des Längsvorsprungs 10 in die Längsnut 9 eingesetzt werden. Anders als der Schneideinsatz 5, der wie beschrieben unlösbar am Messerhalter 4 in der dortigen Ausnehmung 6 befestigt ist, ist der Messerhalter 4 jedoch lösbar am Träger 2 befestigt. Hierzu weist jeder Messerhalter 4 mehrere Bohrungen 11 auf, die ebenfalls gestuft ausgeführt sind und der Aufnahme jeweils einer Schraube 12 dienen. An dem Träger 9 ist ferner jeweils eine Gewindebohrung 13 vorgesehen, in die die jeweilige Schraube 12 eingeschraubt wird. Hierüber wird jeder Messerhalter fest mit dem Träger 2 verbunden, wobei, siehe Fig. 1, jeder Messerhalter im gezeigten Ausführungsbeispiel über mehrere solcher Schrauben 12 am Träger 2 verschraubt ist.

Wie Fig. 1 und insbesondere Fig. 4 ferner zeigt, sind an den beiden Seitenflächen 14 des Trägers 2 jeweils (in Fig. 1 gestrichelt gezeigte) Gewindebohrungen 15 vorgesehen, die es ermöglichen, an jeder Stirnfläche 14 eine Spannplatte 16 mittels einer auf einer Beilagscheibe 17 aufgelagerten Schraube 18 zu befestigen. Wie Fig. 4 zeigt, übergreift die Spannplatte 16 den jeweils benachbarten Messerhalter 4 im Bereich seines Eingriffs in die Längsnut 9, wie in Fig. 4 gestrichelt gezeigt ist. Da sowohl der rechte als auch der linke Messerhalter 4 in dieser Weise über die jeweilige Spannplatte übergriffen ist, und in Folge der Verschraubung der Spannplatten dieselben fest gegen die Messerhalter 4 gepresst werden, kommt es folglich zu einer axialen Verspannung der Messerhalter 4 gegeneinander, was der Stabilität des Messerhalterverbundes dienlich ist. Wenngleich gemäß dem gezeigten Ausführungsbeispiel die Spannplatte den jeweils benachbarten Messerhalter nur ein Stück weit übergreift, ist es selbstverständlich auch denkbar, den Übergriff größer zu gestalten.

Ersichtlich ist also das erfindungsgemäße Schneidmesser 1 modular aufgebaut, bestehend aus dem Träger 2, an dem lösbar mehrere, im gezeigten Beispiel drei Messerhalter 4 nebst Schneideinsätzen 5 befestigt werden können. Selbstverständlich ist auch denkbar, mehr als drei Messerhalter nebst Schneideinsätzen vorzusehen, diese können dann entweder kürzer ausgeführt sein, oder bei entsprechend längerem balkenförmigem Träger 2 in entsprechender Anzahl vorgesehen werden.

Kommt es nun im Betrieb zu einer Beschädigung eines der Schneideinsätze 5, so ist es lediglich erforderlich, den jeweiligen Messerhalter 4 nebst dem beschädigten Schneideinsatz 5 aus dem Messerhalterverbund zu lösen, was sehr einfach dadurch erfolgen kann, dass einerseits lediglich die Schrauben 18 der Spannplatten 16 etwas zu lösen sind, zum anderen nur noch die Schrauben 12, die den Messerhalter 4 am Träger 2 fixieren, entfernt werden müssen. Sodann kann der Messerhalter 4 mit dem beschädigten Schneideinsatz 5 vom Träger 2 entnommen werden und ein neuer Messerhalter 4 mit einem neuen, unbeschädigten Schneideinsatz 5 an seiner Stelle eingesetzt und verschraubt werden. Nach Befestigen sämtlicher Schrauben 12 sowie erneutem Verspannen der Spannschrauben 16 kann es lediglich noch erforderlich sein, die Schneideinsätze 5 plan zu schleifen, um den "neuen" Schneideinsatz 5 einzuschleifen, wonach das Schneidmesser 1 sofort wieder verwendet werden kann.

Eine erfindungsgemäße Stahlcordschere weist wenigstens ein derartiges Schneidmesser auf, denkbar ist aber auch zwei solcher Schneidmesser vorzusehen, von denen das eine ein Obermesser und das andere ein Untermesser bildet. Das Schneidmesser oder zumindest eines der Schneidmesser ist mit einer entsprechenden Bewegungsmechanik, die es relativ zum anderen Schneidmesser bewegt, in an sich bekannter Weise verbunden.

## Patentansprüche

1. Schneidmesser, insbesondere für eine Stahlcordbandschere, umfassend einen balkenförmigen Träger (2), an dem mehrere jeweils wenigstens einen Schneideinsatz (5) aufweisende Messerhalter (4) lösbar befestigt sind, wobei sich die Schneideinsätze (5) zu einer durchgehenden Schneide ergänzen, **dadurch gekennzeichnet, dass** am Träger (2) an jeder Seite (14) wenigstens eine in der Montagestellung die Messerhalter (4) gegeneinander verspannende Spannplatte (16) lösbar befestigt ist.

2. Schneidmesser nach Anspruch 1, **dadurch gekennzeichnet, dass** die Länge eines Messerhalters (4) der Länge des daran befestigten Schneideinsatzes (5) entspricht.

3. Schneidmesser nach Anspruch 1 oder 2, **dadurch gekennzeichnet, dass** am Messerhalter (4) eine Ausnehmung (6) vorgesehen ist, in der der Schneideinsatz (5) formschlüssig aufgenommen und in Lastrichtung gegengelagert ist.

4. Schneidmesser nach Anspruch 3, **dadurch gekennzeichnet, dass** der Schneideinsatz (5) in der Ausnehmung (6) verlötet ist.

5. Schneidmesser nach einem der vorangehenden Ansprüche, **dadurch gekennzeichnet, dass** am Träger (2) eine Ausnehmung (8) vorgesehen ist, in der die Messerhalter (4) formschlüssig aufgenommen sind.

6. Schneidmesser nach Anspruch 5, **dadurch gekennzeichnet, dass** die Ausnehmung (8) eine Längsnut (9) aufweist, in die ein Längsvorsprung (10) der jeweiligen Messerhalters (4) formschlüssig eingreift.

7. Schneidmesser nach einem der vorangehenden Ansprüche, **dadurch gekennzeichnet, dass** die Messerhalter (4) mittels Schrauben (12), die halterseitige Bohrungen (11) durchgreifen und trägerseitig jeweils in eine Gewindebohrung (13) eingeschraubt sind, befestigt sind.

8. Schneidmesser nach einem der vorangehenden Ansprüche, **dadurch gekennzeichnet, dass** am Träger (2) seitlich jeweils wenigstens eine Gewindebohrung (15) vorgesehen ist, in die eine die jeweilige Spannplatte (16) verspannende Schraube (18) eingeschraubt ist.

9. Stahlcordbandschere, umfassend wenigstens ein Schneidmesser (1) nach einem der vorangehenden Ansprüche.

10. Stahlcordbandschere nach Anspruch 10, **dadurch gekennzeichnet, dass** zwei Schneidmesser (1), von denen das eine ein Obermesser und das andere ein Untermesser bilden.

## Claims

1. Cutting knife, in particular for a steel cord cutter, comprising a beam-shaped carrier (2) to which a plurality of knife holders (4), which each have at least one cutting insert (5), are releasably fastened, wherein the cutting inserts (5) combine to form a continuous cutting edge, **characterized in that** at least one clamping plate (16) that braces the knife holders (4) together in the assembled position is fastened releasably to each side (14) of the carrier (2).

2. Cutting knife according to Claim 1, **characterized in that** the length of a knife holder (4) corresponds to the length of the cutting insert (5) fastened thereto.

3. Cutting knife according to Claim 1 or 2, **characterized in that** a recess (6) in which the cutting insert (5) is received in a form-fitting manner and is counter-mounted in the load direction is provided in the knife holder (4).

4. Cutting knife according to Claim 3, **characterized in that** the cutting insert (5) is soldered in the recess (6).

5. Cutting knife according to one of the preceding claims, **characterized in that** a recess (8) in which the knife holder (4) is received in a form-fitting manner is provided in the carrier (2).

6. Cutting knife according to Claim 5, **characterized in that** the recess (8) has a longitudinal groove (9) in which a longitudinal protrusion (10) on the respective knife holder (5) engages in a form-fitting manner.

7. Cutting knife according to one of the preceding claims, **characterized in that** the knife holder (4) is fastened by means of screws (12) which engage through bores (11) on the holder side and are each screwed into a threaded bore (13) on the carrier side.

8. Cutting knife according to one of the preceding claims, **characterized in that** in each case at least one threaded bore (15) is provided laterally in the carrier (2), a screw (18) that braces the respective clamping plate (16) being screwed into said threaded bore (15).

9. Steel cord cutter comprising at least one cutting knife (1) according to one of the preceding claims.

10. Steel cord cutter according to Claim 10, **characterized in that** two cutting knives (1), of which one forms an upper knife and the other forms a lower knife.

## Revendications

1. Lame de coupe, en particulier pour cisailles à ruban de câble d'acier, comprenant un support en forme de poutre (2) au niveau duquel sont fixés de manière amovible plusieurs dispositifs de retenue de lame (4) présentant à chaque fois au moins un insert de coupe (5), les inserts de coupe (5) se complétant pour former un tranchant continu, **caractérisée en ce qu'**au moins une plaque de serrage (16) serrant l'un contre l'autre les dispositifs de retenue de lame (4) dans la position de montage est fixée de manière amovible sur le support (2) au niveau de chaque côté (14).

2. Lame de coupe selon la revendication 1, **caractérisée en ce que** la longueur d'un dispositif de retenue de lame (4) correspond à la longueur de l'insert de coupe (5) fixé à celui-ci.

3. Lame de coupe selon la revendication 1 ou 2, **caractérisée en ce qu'**un évidement (6) est prévu au niveau du dispositif de retenue de lame (4), dans lequel l'insert de coupe (5) est reçu par engagement positif et est contre-supporté dans la direction de charge.

4. Lame de coupe selon la revendication 3, **caractérisée en ce que** l'insert de coupe (5) est brasé dans l'évidement (6).

5. Lame de coupe selon l'une quelconque des revendications précédentes, **caractérisée en ce qu'**un évidement (8) est prévu au niveau du support (2), dans lequel les dispositifs de retenue de lame (4) sont reçus par engagement positif.

6. Lame de coupe selon la revendication 5, **caractérisée en ce que** l'évidement (8) présente une rainure longitudinale (9) dans laquelle vient en prise par engagement positif une saillie longitudinale (10) du dispositif de retenue de lame respectif (4).

7. Lame de coupe selon l'une quelconque des revendications précédentes, **caractérisée en ce que** les dispositifs de retenue de lame (4) sont fixées au moyen de vis (12) qui traversent des alésages (11) du côté du dispositif de retenue et qui sont vissées du côté du support à chaque fois dans un alésage fileté (13).

8. Lame de coupe selon l'une quelconque des revendications précédentes, **caractérisée en ce qu'**au moins un alésage fileté (15) est à chaque fois prévu latéralement sur le support (2), dans lequel est vissée une vis (18) serrant la plaque de serrage respective (16).

9. Cisailles à ruban de câble d'acier, comprenant au moins une lame de coupe (1) selon l'une quelconque des revendications précédentes.

10. Cisailles à ruban de câble d'acier selon la revendication 10, **caractérisées en ce que** deux lames de coupe (1) dont l'une forme une lame de coupe supérieure et l'autre forme une lame de coupe inférieure.
